(19) Europäisches Patentamt
European Patent Office
Office européen des brevets

(11) **EP 1 557 656 B1**

(12) **EUROPÄISCHE PATENTSCHRIFT**

(45) Veröffentlichungstag und Bekanntmachung des Hinweises auf die Patenterteilung:
**21.07.2010 Patentblatt 2010/29**

(51) Int Cl.:
***G01M 17/04*** *(2006.01)*

(21) Anmeldenummer: **05001003.2**

(22) Anmeldetag: **19.01.2005**

(54) **Verfahren und Vorrichtung zum Bestimmen der Achsdämpfung von Fahrzeugen**

Procedure and device for determining the suspension damping of vehicles

Procédé et dispositif de détermination de l'amortissement de la suspension d'un véhicule

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **23.01.2004 DE 102004003606**

(43) Veröffentlichungstag der Anmeldung:
**27.07.2005 Patentblatt 2005/30**

(73) Patentinhaber: **MAHA Maschinenbau Haldenwang GmbH & Co. KG**
**87490 Haldenwang (DE)**

(72) Erfinder: **Knestel, Anton**
**87496 Hopferbach (DE)**

(74) Vertreter: **MERH-IP**
**Matias Erny Reichl Hoffmann**
**Paul-Heyse-Strasse 29**
**80336 München (DE)**

(56) Entgegenhaltungen:
**EP-A- 1 291 635** **DE-A1- 2 225 164**
**DE-A1- 10 017 558** **DE-C1- 3 320 570**
**DE-C1- 4 439 997** **FR-A- 2 292 226**
**US-A- 3 690 145** **US-A- 3 937 058**

## Beschreibung

Die Erfindung betrifft ein Verfahren und eine Vorrichtung zum Bestimmen der Achsdämpfung von Fahrzeugen, wobei zumindest ein Fahrzeugrad auf einer Aufstandsplatte aufsteht und von dieser zu Schwingungen angeregt wird.

Um die Wirkung von in Kraftfahrzeugen eingebauten Achsdämpfern zu bestimmen, werden bekanntermaßen die Räder des Fahrzeugs auf Schwing- oder Aufstandsplatten eines Prüfstandes gestellt. Die Schwingplatten werden mit Frequenzen von oberhalb bis unterhalb der Resonanzfrequenz des Aufhängungssystems der Fahrzeugachse bzw. der Fahrzeugräder erregt. Meist wird dazu ein Schwungrad von einem Elektromotor auf eine entsprechende Umdrehungsgeschwindigkeit beschleunigt. Ein Kurbeltrieb, der mit dem Schwungrad verbunden ist, erregt über ein elastisches Element die Aufstandsplatte. Nach dem Abschalten des Antriebs bewegt sich die Aufstandsplatte mit einer vertikalen Schwingbewegung mit fallender Frequenz. Ein derartiger Prüfstand ist aus der deutschen Offenlegungsschrift DE 101 43 492 A1 bekannt.

Bei Schwingungen von Kraftfahrzeugen sind zwei dominante Schwingungszustände vorhanden. Diese Schwingungszustände bestimmen sich zum einen aus der Aufbaumasse mit der Fahrzeugfeder und zum anderen aus den ungefederten Massen (Rad und Achse) gegenüber der Aufbaufeder. Jeder dieser beiden Schwingungszustände weist eine eigene Resonanzfrequenz auf. Wird eine zusätzliche Fußpunktfeder, wie in der DE 101 43 492 A1 im Prüfstand vorgesehen, entsteht ein dritter dominanter Schwingungszustand mit einer dritten Resonanzfrequenz, die so genannte Prüfstandsresonanz. Diese Prüfstandsresonanz soll möglichst weit von den anderen beiden Resonanzfrequenzen entfernt liegen, um eine genaue Messung der Dämpfung der Radaufhängung zu ermöglichen. Typischerweise liegt die Aufbauresonanz (erste Resonanzfrequenz) zwischen 1 und 2 Hz und die Achsresonanz (zweite Resonanzfrequenz) zwischen 12 und 20 Hz. Da wie beschrieben die Resonanzfrequenz der schwingungsgedämpften Fahrzeugachse gewöhnlich in einem Frequenzbereich zwischen 12 und 20 Hz liegt, wird ein Schwungrad von dem Antrieb auf ca. 1000 U/min beschleunigt. Die Erregung der Aufstandsplatte über den Kurbeltrieb und das elastische Element durchläuft anschließend den Resonanzbereich des Aufhängungssystems der Fahrzeugachse. Die während der Resonanzfrequenz auftretende Amplitude der vertikalen Bewegung des Fahrzeugrads ist ein Maß für die Dämpfung des Aufhängungssystems der Fahrzeugachse und erlaubt eine Beurteilung der Funktionsfähigkeit der Achsdämpfer.

Bei den im Stand der Technik bekannten Prüfvorrichtungen senken sich aufgrund der relativ weichen Fußpunktfedern die Aufstandsplatten beim Auffahren von schwereren Fahrzeugen (SUV, Klein-LKW) auf die Prüfvorrichtung stark ab. Dies hat zur Folge, dass einerseits der verbleibende Federweg der Fußpunktfedern zu gering ist, um die Funktionsfähigkeit der Achsdämpfung ausreichend zu bestimmen, und andererseits zwischen der abgesenkten Aufstandsplatte und einem Hallenboden bzw. der Auffahrplatte eine Stufe entsteht, die das Auf- und Abfahren des Fahrzeugs behindern kann. Um dies zu vermeiden, können bei den bekannten Prüfvorrichtungen die relativ weichen Fußpunktfedern durch relativ harte Fußpunktfedern, d.h. Federn mit einer höheren Federkonstante, ersetzt werden.

Dies führt bei den bekannten Prüfvorrichtungen zu dem Nachteil, dass bei härteren Federelementen und konstanter Aufstandsplattenmasse die Prüfstandsresonanzfrequenz steigt. Da die Prüfstandsresonanzfrequenz in der Regel zwischen Aufbauresonanzfrequenz und Achsresonanzfrequenz liegt, steigt die Prüfstandsresonanz in Richtung Achsresonanz an und erschwert die Messung der Amplitude der Achsresonanz.

Ein weiterer Nachteil von bekannten Prüfvorrichtungen ist, dass bei hohen zu prüfenden Achslasten die mechanische Konstruktion, insbesondere die Schwingen zur Lagerung der Aufstandsplatten, hohen mechanischen Belastungen ausgesetzt sind. Da sich ein großer Teil der Achslast des Fahrzeugs auf dem Kurbeltrieb abstützt, muss auch der Antriebsmotor mechanisch entsprechend ausgelegt werden.

Ein anderer Nachteil der benannten Prüfvorrichtungen ist, dass aufgrund des hohen Gewichts des Aufbaus entweder die Lagerelemente eine sehr hohe mechanische Festigkeit aufweisen müssen oder der Verschleiß und die daraus entstehenden Instandhaltungskosten der bewegten Teile beträchtlich sind.

Die Aufgabe der vorliegenden Erfindung ist es daher, die geschilderten Nachteile des Standes der Technik zu vermeiden und eine Vorrichtung und ein Verfahren zum Bestimmen der Achsdämpfung von Fahrzeugen zu schaffen, die eine genaue Bestimmung der Achsdämpfung von Fahrzeugen, insbesondere mit höherem Fahrzeuggewicht, ermöglichen, wobei der Konstruktionsaufwand, die mechanische Belastung der bewegten Teile des Prüfstandes sowie die Kosten gering sind.

Diese Aufgabe wird erfindungsgemäß durch die unabhängigen Ansprüche gelöst. Die abhängigen Ansprüche betreffen vorteilhafte Ausführungsformen der Erfindung.

Eine erfindungsgemäße Prüfvorrichtung zum Bestimmen der Achsdämpfung von Fahrzeugen kann zumindest eine Aufstandsplatte für ein Fahrzeugrad aufweisen. Die Aufstandsplatte kann über ein erstes elastisches Element mit einem Antrieb verbunden sein. Das elastische Element kann eine Entkopplung der Bewegung von Aufstandsplatte und Antrieb ermöglichen. Die aufgrund der Erregung durch den Antrieb schwingende Aufstandsplatte kann somit eine unterschiedliche Auslenkung, eine Phasendifferenz und eventuell auch eine unterschiedliche Frequenz zu der Erregungsbewegung des Antriebs aufweisen.

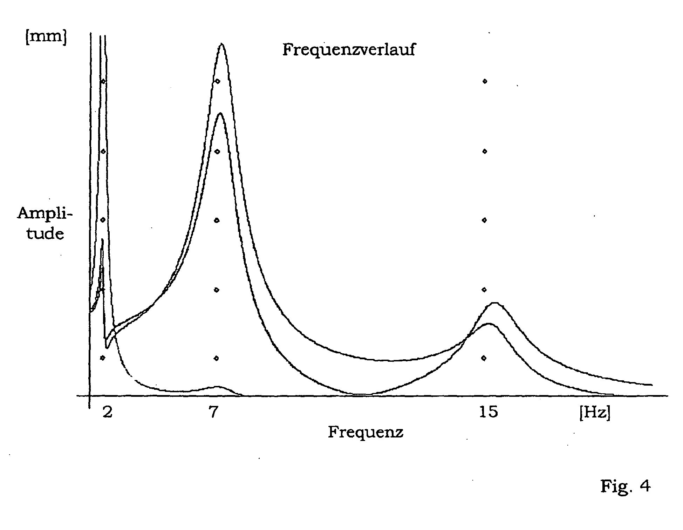

Um eine möglichst gute Entkopplung der Prüfstandsresonanz von den Fahrzeugresonanzen (Aufbau- und Achsresonanz) zu erhalten, wird die Prüfstandsmasse und die Federkonstante derart gewählt, dass die Prüfstandsresonanzfrequenz zwischen den Fahrzeugresonanzfrequenzen im Mittel bei etwa 7 Hz liegt (s. Fig. 4).

Der Antrieb kann zweckmäßigerweise einen Elektromotor und einen Kurbeltrieb und/oder Exzenter aufweisen. Aufgrund der einfachen und genauen Ansteuerbarkeit sind Drehstrommotoren, insbesondere Asynchron-Drehstrommotoren, besonders geeignet.

Die Aufstandsplatte kann weiterhin über ein zweites elastisches Element mit einer Basis des Prüfstandes verbunden sein, wobei das Gewicht der Aufstandsplatte und des Fahrzeugs auf das erste und auf das zweite elastische Element verteilt wird. Vorzugsweise kann das erste elastische Element zwischen 10% und 50% des Gewichts - besonders bevorzugt ist 10% - und das zweite elastische Element zwischen 50% und 90% des Gewichts - besonders bevorzugt ist 90% - abstützen. Bei der Auslegung der elastischen Elemente ist zu berücksichtigen, dass zur Erregung der gewünschten Schwingung aufgrund des Federgesetzes für schwache erste elastische Elemente, z.B. Federelemente mit kleiner Federkonstante, der Hub des Antriebs vergrößert werden muss, um eine entsprechende Kraft auf die Aufstandsplatte zu erzielen. Die Gestaltungsmöglichkeiten bei der Konstruktion bzw. Auslegung des Prüfstandes, insbesondere der elastischen Elemente, sind deshalb begrenzt.

Erfindungsgemäß wird eine Bewegung der Aufstandsplatte von einer Messvorrichtung erfasst. Die Messvorrichtung kann die Amplitude und/oder die Frequenz einer vertikalen Bewegung der Aufstandsplatte erfassen. Andere Möglichkeiten zur Erfassung der Bewegung der Aufstandsplatte, wie beispielsweise eine Winkel- oder Kraftmessung, können erfindungsgemäß auch vorgesehen sein. Da die während der Resonanzfrequenz auftretende Amplitude ein Maß für die Dämpfung des zu prüfenden Achsdämpfers im Fahrzeug ist, eignet sich die Amplitudenhöhe im Resonanzfall des Schwingungssystems besonders gut zur Auswertung und Beurteilung der Achsdämpfer des zu prüfenden Fahrzeugs.

Erfindungsgemäß kann an der Prüfvorrichtung ein Massenelement mit einer Zusatzmasse $m_z$ vorgesehen sein. Das Massenelement wirkt dabei auf die Aufstandplatte und beeinflusst eine Resonanzfrequenz $f_R$ der Prüfvorrichtung. Vorzugsweise ist das Massenelement derart dimensioniert, dass sich bei Anregung der Aufstandsplatte durch den Antrieb eine vorgegebene Resonanzfrequenz $f_R$ einstellt. Die Zusatzmasse $m_z$ kann an der Prüfvorrichtung derart angeordnet werden, dass die resultierende Prüfstandsresonanzfrequenz $f_R$, trotz einer an eine geänderte Nutzlast angepasste Federkonstante c der Prüfstandsfeder, im Wesentlichen konstant bleibt. Die Prüfstandsresonanzfrequenz $f_R$ liegt dabei vorzugsweise zwischen 2 Hz und 12 Hz, weiter vorzugsweise zwischen 4 Hz und 10 Hz, weiter vorzugsweise zwischen 6 Hz und 8 Hz und weiter vorzugsweise bei 7 Hz.

Der Zusammenhang zwischen Resonanzfrequenz und Federhärte sowie bewegter Masse ist allgemein in Formel 1 dargestellt. Dabei entspricht $f_R$ der Resonanzfrequenz, c der Federkonstante der Prüfstandsfeder und m der Aufstandplattenmasse.

$$f_R = \frac{1}{2\pi}\sqrt{c/m} \qquad \textbf{Formel 1}$$

Passt man die Aufstandsplattenmasse der höheren Federkonstante an, um ein konstantes Resonanzverhalten zu erhalten, steigt jedoch das Gesamtgewicht der Prüfvorrichtung an, woraufhin die gesamte konstruktive Auslegung der Prüfvorrichtung angepasst werden muss. Auch der vorhandene Bauraum, der für die Aufstandsplatten zur Verfügung steht, ist in der Regel begrenzt.

Vorteilhafterweise können das erste und/oder zweite elastische Element als Schrauben- oder Blattfedern ausgebildet sein. Derartige Federelemente zeichnen sich dadurch aus, dass sie fast keine Eigendämpfung aufweisen und eine hohe Messgenauigkeit der Prüfvorrichtung ermöglichen. Selbstverständlich können jedoch auch andere elastische Elemente, beispielsweise pneumatische oder hydraulische Systeme, vorgesehen sein. Um eine Fußpunktfeder mit variabler Federkonstante zu realisieren, ist es zweckmäßig, dass das zweite elastische Element als Luftbalgfeder ausgebildet ist.

Zweckmäßigerweise kann die Aufstandsplatte über eine Schwinge mit dem Antrieb in einer Wirkverbindung stehen. Die Aufstandsplatte kann von der Schwinge gehalten und bewegt werden. Die Aufstandsplatte kann über die Schwinge und das erste elastische Element mit dem Antrieb in einer Wirkverbindung stehen. Eine derartige Anordnung ermöglicht eine einfache und belastungsfähige Führung der Aufstandsplatte für vertikale Bewegungen. Durch das zweite elastische Element, welches die Schwinge gegenüber der Basis abstützt, kann die Belastung der Schwinge weiter verringert werden und eine vereinfachte Konstruktion der Schwinge wird ermöglicht. Erfindungsgemäß wird dieser Vorteil jedoch auch bei andersartigen Führungen der Aufstandsplatte erzielt.

Gemäß einer vorteilhaften Ausgestaltung der Erfindung kann das Massenelement über die Schwinge auf die Aufstandsplatte wirken. Das Massenelement kann dabei an einem Zusatzarm angebracht sein, der wiederum an der Schwinge angebracht ist. Somit kann die Zusatzmasse mz über den Zusatzarm auf die Schwinge und von dort über ihr Trägheitsmoment bezogen auf den Drehpunkt des Systems (Zusatzarm und Schwinge) an der Basis auf den Schwingvorgang einwirken. Die Zusatzmasse $m_Z$ addiert sich daher zur Masse der Aufstandsplatte in der Schwingungsrichtung mit ihrer gemäß dem Trägheitsmoment wirksamen Masse $m_{Z'}$. Um den Effekt einer gewünschten wirksamen Zusatzmasse $m_{Z'}$ zu erzielen, ist also nur eine am Zusatzarm angebrachte tatsächliche reduzierte Masse $m_Z$ erforderlich. Aus der Gleichung für das Trägheitsmoment $j = m \cdot d^2$ folgt für die wirksame Masse $m_{Z'}$

$$m_{z'} = m_z \frac{d_1^2}{d_2^2} \qquad \textbf{Formel 2,}$$

mit dem Abstand $d_1$ zwischen Zusatzmasse und Drehpunkt der Schwinge an der Basis sowie dem Abstand $d_2$ zwischen dem Drehpunkt der Schwinge an der Basis und dem Befestigungspunkt der Aufstandsplatte mit der Schwinge bzw. dem Drehpunkt am die Aufstandsplatte tragenden Element des Schwingkörpers. Gemäß Formel 2 geht der Abstand $d_1$ also quadratisch in den Zusammenhang zwischen der wirksamen Zusatzmasse $m_{Z'}$ und der tatsächlichen, am Hebelarm vorgesehenen Zusatzmasse $m_Z$ ein.

Erfindungsgemäß ist, wenn die Federkonstante verdoppelt wird, nach Formel 1 die Masse der Aufstandsplatte $m_{A\_alt}$ durch eine gleichgroße Zusatzmasse $m_Z$ zu verdoppeln. Nach Formel 2 reicht aber bei einer Verdoppelung der Länge des Hebelarms ein Viertel der Zusatzmasse $m_Z$ aus, um die gewünschte Wirkung auf die Resonanzfrequenz des Prüfstands zu erzielen. Dies soll anhand eines Beispiels verdeutlicht werden. Beträgt anfänglich die Masse der Aufstandsplatte $m_{A\_alt}$=100kg und wird die Federkonstante verdoppelt, resultiert daraus eine gewünschte Aufstandsplattenmasse $m_{A\_neu}$ von 200kg. Die zusätzliche wirksame Masse $m_{Z'}$ von 100kg kann aber bei Verdoppelung des Hebelarms auf die tatsächliche Zusatzmasse $m_Z$ von 25kg (=1/4 der wirksamen zusätzlichen Masse) reduziert werden. Diese reduzierte Zusatzmasse $m_Z$ von 25kg entspricht dann einem Viertel der zusätzlichen wirksamen Masse $m_{Z'}$ von 100kg.

Dadurch, dass die tatsächlich aufzubringende Zusatzmasse geringer ist als die benötigte Zusatzmasse, ist es möglich, die Gesamtmasse der Prüfvorrichtung zu verringern. Durch das erfindungsgemäße Vorsehen eines Massenelements, das über einen Hebelarm auf die Aufstandsplatte wirkt, kann auch bei unveränderter Federkonstante eine geringere Gesamtmasse der Prüfvorrichtung als die bei den aus dem Stand der Technik bekannten Prüfvorrichtungen bei gleicher Resonanzfrequenz erhalten werden. Ferner ergibt sich aus dem geringeren Gesamtgewicht ein verringerter Verschleiß der beweglichen Teile.

Der Zusatzarm kann lösbar mit der Schwinge verbunden sein. Der Zusatzarm kann auch über zumindest ein weiteres elastisches Element auf die Aufstandsplatte wirken. Dabei kann der Zusatzarm direkt an der Aufstandsplatte montiert sein.

Zweckmäßigerweise kann die Länge des Zusatzarms und/oder die Federkonstante von zumindest einem elastischen Element, vorzugsweise die Fußpunktfeder, variabel sein. Die Länge des Zusatzarmes kann durch ein Schraubgewinde oder eine andere geeignete Ausführung einstellbar sein. Ferner kann die Größe der Zusatzmasse mz in Abhängigkeit zu der Länge des Zusatzarms, der Nutzlast und/oder der Federkonstante des zumindest einen elastischen Elements bestimmt und verändert werden. Ein Vorteil dieser Anordnung besteht darin, dass die erfindungsgemäße Vorrichtung je nach Höhe der Nutzlast einstellbar ist. Damit ist es möglich mit einer Prüfvorrichtung bei verschiedenen Fahrzeugtypen (PKW, SUV, Klein-LKW) die Achsdämpfung zu bestimmen.

Die Schwinge kann auch als Doppelschwinge, insbesondere als Parallelschwinge, ausgeführt sein. Eine Parallelschwinge besteht aus einem ersten Schwingarm und einem zweiten Schwingarm. Der erste und/oder zweite Schwingarm kann mit dem Antrieb verbunden sein. Die Zusatzmasse $m_Z$ kann über den Zusatzarm mit dem ersten und/oder zweiten Schwingarm verbunden sein. Ist die Schwinge als Parallelschwinge ausgeführt, wird eine horizontale Führung der Aufstandplatte nicht benötigt. Die Parallelschwinge ermöglicht eine zur Vertikalen parallele, lineare Bewegung der Aufstandsplatte, ohne dass eine weitere Führung notwendig ist, welche ein Verkippen der Aufstandsplatte verhindert. Die Aufstandsplatte kann über ein tragendes Element drehbar mit den beiden Schwingarmen verbunden sein. Vorzugsweise bilden die Schwingarme und die Verbindungslinien der Drehpunkte der Schwingarme mit der Basis sowie die Verbindungslinien der Drehpunkte der Schwingarme mit dem tragenden Element ein Parallelogramm. Selbstverständlich sind für die Aufstandsplatte auch andere Führungen und/oder Halte- bzw. Verbindungsmittel mit dem Antrieb möglich.

Gemäß einer anderen vorteilhaften Ausgestaltung kann die Zusatzmasse $m_Z$ auch auf beide Schwingarme aufteilt sein. Es kann an beiden Schwingarmen zumindest ein Zusatzarm angebracht sein, an dem jeweils ein Teil der Zusatzmasse $m_Z$ angebracht ist.

Es kann auch zweckmäßig sein, dass die Zusatzmasse $m_Z$ oder Teile der Zusatzmasse $m_Z$ an der Aufstandsplatte angebracht sind. Besonders vorteilhaft ist es, wenn die Zusatzmasse symmetrisch angebracht ist, oder in Form mehrerer kleinerer Massenelement mit der Gesamtmasse mz vorgesehen ist, die symmetrisch angeordnet sind. Auf diese Weise werden die Führung und die Lagerung der Aufstandsplatte gleichmäßig belastet und Messfehler aufgrund einseitiger Belastung verhindert.

Ein Verfahren zum Bestimmen der Achsdämpfung von Fahrzeugen, umfasst das Antreiben einer Aufstandsplatte für ein Fahrzeugrad über ein erstes elastisches Element und das Erfassen einer Bewegung der Aufstandsplatte durch eine Messvorrichtung wobei, wenn zumindest bei einem elastischen Element die Federkonstante der Nutzlast angepasst wurde, eine Zusatzmasse $m_Z$ an der Prüfvorrichtung derart angeordnet wird, dass eine Prüfstandsresonanzfrequenz $f_R$ der oben erwähnten Vorrichtung im Wesentlichen konstant bleibt.

Ein weiteres Verfahren zum Bestimmen der Achsdämpfung von Fahrzeugen, umfasst das Antreiben von mehreren, jeweils einem Fahrzeugrad zugeordneten, Aufstandsplatten über jeweils ein erstes elastisches Element von jeweils einem Antrieb und die Erfassung einer Bewegung der Aufstandsplatte, wobei der Antrieb der Aufstandplatten phasensynchron erfolgen kann.

Die erfindungsgemäße Vorrichtung kann auch derart aufgebaut sein, dass für jedes Rad eines zu prüfenden Fahrzeugs eine Aufstandsplatte vorgesehen ist und alle Aufhängungssysteme der Fahrzeugachsen oder Fahrzeugräder gleichzeitig und/oder nacheinander geprüft werden können. Auch kann die Vorrichtung zwei Aufstandsplatten aufweisen, wodurch dann entweder die vorderen oder hinteren Aufhängungssysteme der Fahrzeugachsen bzw. Fahrzeugräder gleichzeitig und/oder nacheinander geprüft werden können.

Die erfindungsgemäße Vorrichtung und das erfindungsgemäße Verfahren ermöglichen eine einfache und genaue Bestimmung der Achsdämpfung von Fahrzeugen, wobei durch das Vorsehen einer Zusatzmasse $m_Z$, die direkt an der Aufstandsplatte ankoppelbar ist oder indirekt auf die Aufstandsplatte wirkt, die Führung der Aufstandsplatte und der Antriebsmotor von dem Fahrzeuggewicht und dem Gewicht der Aufstandsplatte teilweise entlastet werden.

Weitere Besonderheiten und Vorzüge der Erfindung lassen sich den Zeichnungen und der folgenden Beschreibung bevorzugter Ausführungsbeispiele entnehmen. Es zeigen:

Fig. 1 ein schematisches Funktionsschaltbild zur Erläuterung der Erfindung;

Fig. 2 eine schematische Darstellung einer unbelasteten Prüfvorrichtung;

Fig. 3 eine schematische Darstellung einer belasteten Prüfvorrichtung; und

Fig. 4 einen typischen Frequenzverlauf der erfindungsgemäßen Prüfvorrichtung.

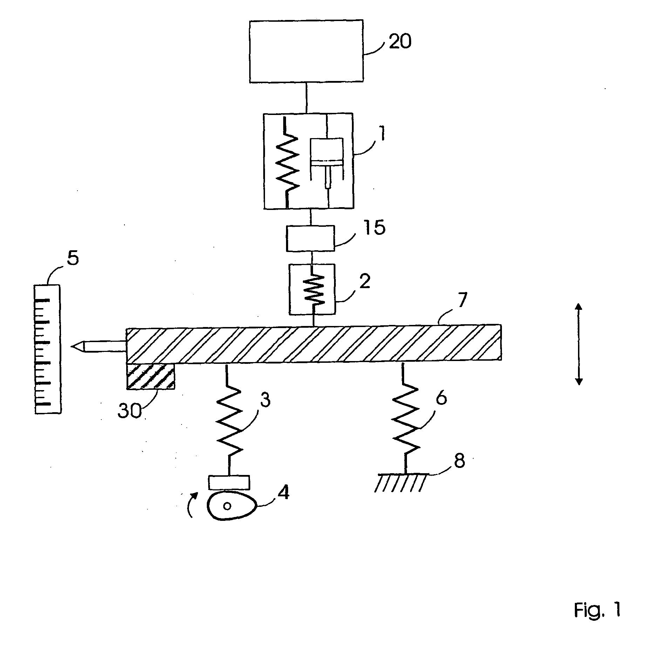

Die Fig. 1 zeigt ein schematisches Funktionsschaltbild zur Erläuterung des Funktionsprinzips der Erfindung. Auf einer Aufstandsplatte 7 der Prüfvorrichtung steht ein Fahrzeugrad 2 des zu prüfenden Fahrzeugs auf. Das Fahrzeugrad 2 wird aufgrund der elastischen Eigenschaften des Reifens als Reifenfeder dargestellt. Die Reifensteifigkeit der Reifenfeder wird vom Reifentyp in Abhängigkeit des Reifenquerschnitts und dem Reifendruck beeinflusst. Bei leichteren Fahrzeugen ist die Reifenfeder konstruktionsbedingt weicher als bei schwereren Fahrzeugen, deren Reifenfeder eine größere Reifensteifigkeit aufweist. Der Achsdämpfer 1 des Fahrzeugs wird in Fig. 1 als ein gedämpftes Federsystem, die auf die Achse wirkende Fahrzeugmasse durch den Block 20 und die ungefederte Achsmasse durch den Block 15 dargestellt.

Zur Prüfung des Achsdämpfers 1 wird dieser von der Aufstandsplatte 7 über das Fahrzeugrad 2 zu Schwingungen mit verschiedenen Frequenzen angeregt. Die Amplituden der Bewegungen der Aufstandsplatte 7 werden über eine Messvorrichtung 5 erfasst. Die Bewegungen der Aufstandsplatte 7 entsprechen den Bewegungen des Achsdämpfers 1, wenn der Einfluss der Reifenfeder 2 vernachlässigt werden kann. Durch eine entsprechende Abstimmung des Feder-Masse-Systems der Prüfvorrichtung mit dem Feder-Masse-System des Fahrzeugs kann gewährleistet werden, dass keine Phasendifferenzen zwischen Aufstandsplatte 7 und Rad 2 bzw. Achsdämpfer 1 auftreten.

Die Aufstandsplatte 7 ist über ein erstes elastisches Element 3 mit einem Antrieb 4 verbunden. Der Antrieb 4 kann beispielsweise einen Elektromotor, insbesondere einen Asynchron-Drehstrommotor, aufweisen, der über einen Exzenter- oder Kurbeltrieb mit dem ersten elastischen Element 3 verbunden ist. Durch die Drehbewegung des Exzenters wird die Aufstandsplatte 7 zu vertikalen Schwingbewegungen angeregt. Aufgrund der elastischen Kopplung zwischen Aufstandsplatte 7 und Antrieb 4 können Phasendifferenzen zwischen diesen auftreten. Zur Abstimmung der Feder-Masse-Systeme ist es vorteilhaft, dass das erste elastische Element 3 eine geringere Federhärte aufweist als die Reifenfeder 2. In diesem Fall kann die Reifenfeder 2 vernachlässigt werden und Achsdämpfer 1 und Aufstandplatte 7 schwingen gleichförmig. Zum Erzielen eines genauen Messergebnisses ist es vorteilhaft, wenn das Schwingsystem des Prüfstands eine möglichst geringe Eigendämpfung aufweist.

Um ein zu großes Absenken der Aufstandsplatte 7 bei Belastung mit einem schweren Fahrzeug zu verhindern, ist die Radaufstandsplatte 7 mit einem zweiten elastischen Element 6 verbunden, das sich gegen eine Basis 8 der Prüfvorrichtung abstützt. Diese Basis kann der Rahmen der Prüfvorrichtung sein. Das zweite elastische Element 6 stützt die Radaufstandsplatte 7, führt einen Teil der Gewichtskraft des Fahrzeugs auf die Basis 8 ab und wird deshalb auch als Bypassfeder bezeichnet. Die elastischen Elemente 3, 6 können als Schraub-, Blatt- oder Luftbalgfedern ausgebildet sein. Es ist auch möglich elastische Elemente mit veränderbarer Federsteifigkeit vorzusehen.

Da sich bei Anpassung der Federkonstante bzw. der Federhärte von zumindest einem elastischen Element, die gesamte Schwingungscharakteristik der Prüfvorrichtung ändert, ist an der Radaufstandsplatte 7 eine Zusatzmasse 30 angebracht. Die Anpassung der Federkonstante erfolgt insbesondere bei höheren Achsgewichten (z.B. bei schwereren Fahrzeugen) durch Verwendung von einer härteren Fußpunktfeder 6. Durch die Zusatzmasse 30 wird das Verhältnis c/m zwischen der Federhärte c der Prüfvorrichtung und der gesamten bewegten Masse m der Prüfvorrichtung im Wesentlichen wieder auf den ursprünglichen Wert gebracht, so dass gem. Formel 1 die Resonanzfrequenz $f_R$ des Prüfstands konstant bleibt.

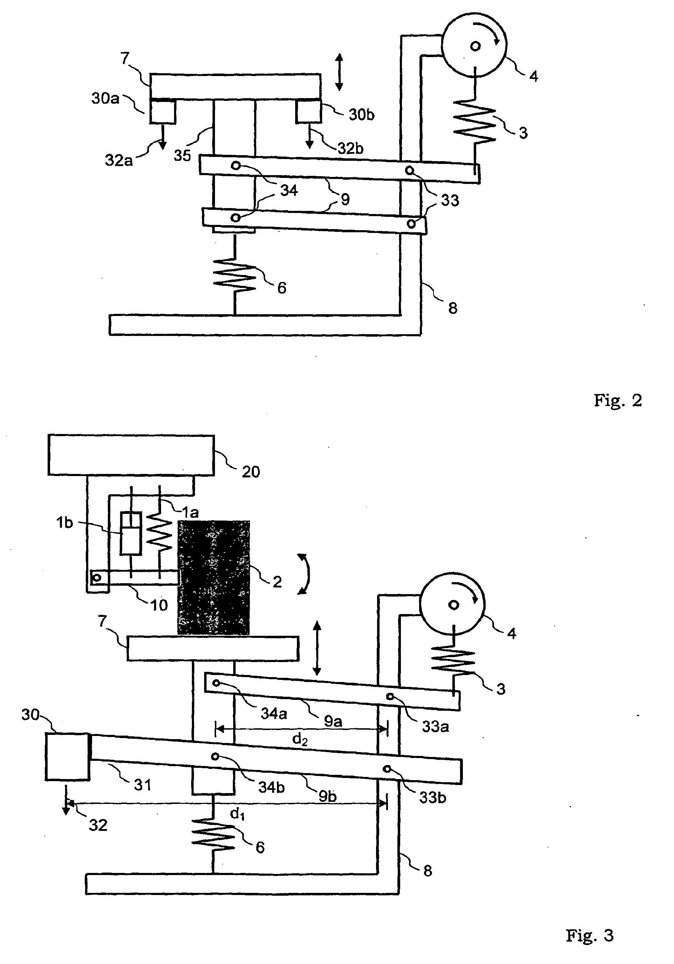

Die Fig. 2 zeigt eine schematische Darstellung einer unbelasteten Prüfvorrichtung. Die Aufstandsplatte 7 wird von einem tragenden Element 35 und einer Schwinge 9 gehalten, die hier als Doppelschwinge ausgeführt ist. Auf diese Weise wird eine nahezu reibungsfreie, parallele Auf- und Ab-Bewegung der Aufstandsplatte 7 ermöglicht. Anstatt der gezeigten Doppelschwinge können aber auch eine einfache Schwinge und ein Führungsmechanismus vorgesehen sein, der eine parallele Bewegung der Aufstandsplatte 7 erzwingt und verhindert, dass die Aufstandsplatte 7 bei Belastung verkippt. Die Schwinge 9 ist über das erste elastische Element 3 mit dem Antrieb 4 der Prüfvorrichtung verbunden. Die Schwinge ist über ein erstes Lager 33 mit der Basis 8 der Prüfvorrichtung und über ein zweites Lager 34 mit der Aufstandsplatte 7 drehbar verbunden. Der Antrieb 4 weist einen Kurbeltrieb zur Erzielung eines Erregerhubs auf. Die Drehbewegung des Antriebs 4 wird über den Kurbeltrieb und die Schwinge 9 in eine vertikale Bewegung der Aufstandsplatte 7 überführt. Das zweite elastische Element 6 ist in dem gezeigten Ausführungsbeispiel derart an der Aufstandsplatte angeordnet, dass es die Aufstandsplatte gegen die Basis 8 abstützt. Die Federhärte des zweiten elastischen Elements 6 kann veränderbar sein.

An der Aufstandsplatte 7 sind zwei Massenelemente 30a, 30b symmetrisch in Bezug auf die Führung der Platte 7 angeordnet, um eine symmetrische Belastung mit der zusätzlichen Gesamtmasse $m_Z$ der beiden Massenelemente 30a, 30b zu erzielen. Dies hat den Vorteil, dass die Führung der Platte 7 durch die Doppelschwinge 9 nicht einseitig durch eine Zusatzmasse belastet wird und verhindert, dass aufgrund einer unsymmetrischen Anordnung Messfehler entstehen. Die wirkenden Gewichtskräfte sind durch die Pfeile 32a, b dargestellt. Die Gesamtmasse $m_Z$ der beiden Massenelemente 30a, 30b ist gem. Formel 1 derart eingestellt, dass die gewünschte Kraft auf die Aufstandsplatte 7 wirkt und die erwünschte Resonanzfrequenz $f_r$ des Prüfstands erzielt wird.

Die Fig. 3 zeigt schematisch eine mit einem Fahrzeug belastete Prüfvorrichtung, bei der die Schwinge 9 als Parallelschwinge mit einem ersten Schwingarm 9a und einem zweiten Schwingarm 9b ausgebildet ist. Der Schwingungsdämpfer 1 wird als ein Federelement 1a und ein Dämpfungselement 1b dargestellt. Die Aufstandsplatte 7 wird von der Parallelschwinge 9a, 9b gehalten. Der Antrieb 4 ist über das erste elastische Element 3 und den ersten Schwingarm 9a mit der Prüfvorrichtung verbunden. Der erste Schwingarm 9a ist über ein erstes Lager 33a mit der Basis 8 der Prüfvorrichtung und über ein zweites Lager 34a mit der Aufstandsplatte 7 drehbar verbunden. Der zweite Schwingarm 9b ist über ein erstes Lager 33b mit der Basis 8 der Prüfvorrichtung und über ein zweites Lager 34b mit der Aufstandsplatte 7 drehbar verbunden.

An der Schwinge 9b ist ein Zusatzarm 31 befestigt. Der Zusatzarm 31 erstreckt sich von dem zweiten Lager 34b aus gesehen weg von Lager 33b. Dabei ist nicht erforderlich, dass die Schwinge 9 und der Zusatzarm 31 fluchten. Der Zusatzarm 31 kann auch im Wesentlichen horizontal ausgerichtet sein. An dem Zusatzarm 31 ist wiederum eine Zusatzmasse 30 angebracht. Durch die Montage der Zusatzmasse 30 an dem Zusatzarm 31 übt die Zusatzmasse 30 eine Kraft 32, entsprechend dem Hebelgesetz nach Formel 2, auf die Aufstandsplatte 7 aus. Die Länge des Zusatzarms 31 kann einstellbar sein, um die Kraft 32 gemäß der Federhärte der Fußpunktfeder 6 anzupassen. Dies ist insbesondere bei variablen Fußpunktfedern 6 mit einstellbarer Federkonstante zweckmäßig. Die Zusatzmasse 30 kann so ausgebildet sein, dass bei Bedarf weitere Zusatzmassen 30a an der Zusatzmasse 30 befestigt werden können.

Der Hub des Kurbeltriebes bewirkt eine vertikale Schwingbewegung der Aufstandsplatte 7, welche die Fahrzeugachse 10 mit Fahrzeugrad 2 und Achsdämpfer 1 zu Schwingungen anregt. Zur Prüfung des Achsdämpfers 1 erfolgt eine Anregung mit verschiedenen Frequenzen, insbesondere im Frequenzbereich von 0 bis 15 Hz. In diesem Frequenzbereich liegt gewöhnlich die Resonanzfrequenz der Fahrzeugradaufhängung. Bei einer Anregung mit der Resonanzfrequenz erfolgt eine Resonanzschwingung der Fahrzeugachse 10 mit Fahrzeugrad 2 und Achsdämpfer 1. Die Amplitude dieser Resonanzschwingung kann über die Bewegung der Aufstandsplatte 7 erfasst werden. Eine Auswertung der Amplitude und/oder des Verlaufs der Resonanzschwingungen erlauben eine zuverlässige Beurteilung des zu prüfenden Achsdämpfers 1 im eingebauten Zustand.

In Fig. 4 ist der Frequenzverlauf der Aufbauresonanz, der Prüfstandsresonanz und der Achsresonanz (von links nach rechts) gezeigt. Die Aufbauresonanz hat einen Maximalwert zwischen 1 und 2 Hz. Die Achsresonanz weist ein Maximum zwischen 12 und 20 Hz auf. Die Prüfstandsresonanz weist einen Maximalwert zwischen den Maxima der Aufbauresonanz und der Achsresonanz auf, der typischerweise bei ca. 7 Hz liegt.

**Patentansprüche**

1.  Prüfvorrichtung zum Bestimmen der Achsdämpfung von Fahrzeugen, mit
    einer Basis (8), einer Aufstandsplatte (7) für ein Fahrzeugrad (2), wobei die Aufstandsplatte (7) über eine Doppelschwinge (9) und ein erstes elastisches Element (3) mit einem Antrieb (4) verbunden ist und über ein zweites elastisches Element (6) mit der Basis (8) verbunden ist, und einer Messvorrichtung (5), die eine Bewegung der Aufstandsplatte (7) erfasst, wobei der Antrieb (4) die Aufstandsplatte (7) über die Doppelschwinge (9) in eine zur Vertikalen parallele Schwingung versetzt,
    **dadurch gekennzeichnet, dass**
    ein Massenelement (30) vorgesehen ist, das auf die Aufstandsplatte (7) wirkt und eine Resonanzfrequenz $f_R$ der Aufstandsplattenschwingung beeinflusst.

2.  Vorrichtung nach Anspruch 1, **dadurch gekennzeichnet, dass** das Massenelement (30) derart dimensioniert ist, dass sich bei Anregung der Aufstandplatte (7) eine vorgegebene Resonanzfrequenz $f_R$ einstellt.

3.  Vorrichtung nach Anspruch 1 oder 2, **dadurch gekennzeichnet, dass** die Aufstandsplatte (7) über die Doppelschwinge (9) mit dem Antrieb (4) in einer Wirkverbindung steht und das Massenelement (30) über die Schwinge (9) auf die Aufstandsplatte (7) wirkt.

4.  Vorrichtung nach zumindest einem der Ansprüche 1 bis 3, **dadurch gekennzeichnet, dass** die Zusatzmasse (30) an einem Zusatzarm (31) angebracht ist und über den Zusatzarm (31) auf die Aufstandsplatte (7) wirkt.

5.  Vorrichtung nach zumindest einem der Ansprüche 1 bis 4, **dadurch gekennzeichnet, dass** die Länge des Zusatzarms (31) veränderbar ist.

6.  Vorrichtung nach zumindest einem der Ansprüche 1 bis 5, **dadurch gekennzeichnet, dass** die Zusatzmasse (30) in Abhängigkeit von der Länge des Zusatzarms (31), der Nutzlast und der Federkonstante zumindest eines elastischen Elements (3, 6) bestimmt wird.

7.  Vorrichtung nach zumindest einem der Ansprüche 1 bis 6, **dadurch gekennzeichnet, dass** die Doppelschwinge (9) aus einem ersten Schwingarm (9a) und einem zweiten Schwingarm (9b) besteht, der erste Schwingarm (9a) mit dem Antrieb (4) verbunden ist und die Zusatzmasse (30) über den Zusatzarm (31) mit dem zweiten Schwingarm (9b) verbunden ist.

8.  Vorrichtung nach zumindest einem der Ansprüche 1 bis 7, **dadurch gekennzeichnet, dass** das erste elastische Element (3) im Wesentlichen 10% und das zweite elastische Element (6) im Wesentlichen 90% der Masse der Aufstandsplatte (7) abstützt.

9.  Vorrichtung nach zumindest einem der Ansprüche 1 bis 8, **dadurch gekennzeichnet, dass** die Zusatzmasse (30) an der Aufstandsplatte (7) angebracht ist.

10. Vorrichtung nach zumindest einem der Ansprüche 3 bis 9, **dadurch gekennzeichnet, dass** die Schwingarme (9a, b) der Doppelschwinge (9) sowie die Verbindungslinie der Drehpunkte (33a,b) der Schwingarme (9a,b) mit der Basis (8) und die Verbindungslinie der Drehpunkte (33a,b) der Schwingarme (9a,b) mit einem die Aufstandsplatte tragenden Element (35) ein Parallelogramm bilden.

11. Prüfverfahren zum Bestimmen der Achsdämpfung von Fahrzeugen, mit den Schritten:

    Antreiben einer Aufstandsplatte (7) für ein Fahrzeugrad (2) über ein erstes elastisches Element (3) und Erfassen einer Bewegung der Aufstandsplatte (7) durch eine Messvorrichtung (5),
    **dadurch gekennzeichnet, dass**
    ein Massenelement (30) vorgesehen ist, das auf die Aufstandplatte (7) wirkt und eine Resonanzfrequenz $f_R$ der schwingenden Aufstandsplatte (7) beeinflusst.

12. Verfahren nach Anspruch 10, **gekennzeichnet durch**, Dimensionieren des Massenelements (30), so dass sich bei Anregung der Aufstandplatte (7) eine vorgegebene Resonanzfrequenz $f_R$ einstellt.

**Claims**

1. A testing apparatus for determining the axle damping of vehicles, comprising
a base (8), a footprint plate (7) for a vehicle wheel (2), wherein said footprint plate (7) is connected to a drive (4) via a double rocker (9) and a first elastic member (3) and is connected to said base (8) via a second elastic member (6), and a measuring apparatus (5) detecting a movement of said footprint plate (7), wherein said drive (4) causes said footprint plate (7) via said double rocker (9) to perform an oscillation in parallel to the vertical direction, **characterized in that**
a mass member (30) is provided acting on said footprint plate (7) and influencing a resonance frequency fR of said footprint plate oscillation.

2. The apparatus according to claim 1, **characterized in that** said mass member (30) is dimensioned such that a predetermined resonance frequency fR appears when said footprint plate (7) is excited.

3. The apparatus according to claim 1 or 2, **characterized in that** said footprint plate (7) is actively connected to said drive (4) via said double rocker (9) and said mass member (30) acts on said footprint plate (7) via said rocker (9).

4. The apparatus according to at least one of the claims 1 to 3, **characterized in that** said auxiliary mass (30) is mounted to an auxiliary arm (31) and acts on said footprint plate (7) via said auxiliary arm (31).

5. The apparatus according to at least one of the claims 1 to 4, **characterized in that** the length of said auxiliary arm (31) is variable.

6. The apparatus according to at least one of the claims 1 to 5, **characterized in that** said auxiliary mass (30) is determined depending on the length of said auxiliary arm (1), the payload and the spring constant of at least one elastic member (3, 6).

7. The apparatus according to at least one of the claims 1 to 6, **characterized in that** said double rocker (9) consists of a first rocker arm (9a) and of a second rocker arm (9b), wherein said first rocker arm (9a) is connected to said drive (4) and said auxiliary mass (30) is connected to said second rocker arm (9b) via said auxiliary arm (31).

8. The apparatus according to at least one of the claims 1 to 7, **characterized in that** said first elastic member (3) supports substantially 10 % of the mass of said footprint plate (7) and said second elastic member (6) supports substantially 90 % thereof.

9. The apparatus according to at least one of the claims 1 to 8, **characterized in that** said auxiliary mass (30) is mounted to said footprint plate (7).

10. The apparatus according to at least one of the claims 3 to 9, **characterized in that** said rocker arms (9a,b) of said double rocker (9) as well as the line connecting the pivot points (33a,b) of said rocker arms (9a,b) to said base (8) and the line connecting said pivot points (33a,b) of said rocker arms (9a,b) to a member (35) supporting said footprint plate form a parallelogram.

11. A testing method for determining the axle damping of vehicles, comprising the steps:

    driving a footprint plate (7) for a vehicle wheel (2) via a first elastic member (3) and detecting a movement of said footprint plate (7) by means of a measuring apparatus (5),
    **characterized in that**
    a mass member (30) is provided acting on said footprint plate (7) and influencing a resonance frequency fR of said oscillating footprint plate (7).

12. The method according to claim 10, **characterized by** dimensioning said mass member (30) such that a predetermined resonance frequency fR appears when said footprint plate (7) is excited.

**Revendications**

1. Dispositif d'essai pour déterminer l'amortissement d'essieux de véhicules, comportant une base (8), un plateau de contact (7) pour une roue de véhicule (2), dans lequel le plateau de contact (7) est relié à un dispositif d'entraînement (4) par l'intermédiaire d'un double balancier (9) et d'un premier élément élastique (4), et est relié à la base (8) par l'intermédiaire d'un second élément élastique (6), et un dispositif de mesure (5) qui enregistre un mouvement du plateau de contact (7), dans lequel le dispositif d'entraînement (4) fait osciller le plateau de contact (7) parallèlement à la verticale par l'intermédiaire du double balancier (9),
**caractérisé en ce qu'**un élément de masse (30) est prévu, lequel agit sur le plateau de contact (7) et influe sur une fréquence de résonance $f_R$ de l'oscillation du plateau de contact.

**2.** Dispositif selon la revendication 1, **caractérisé en ce que** l'élément de masse (30) est dimensionné de telle sorte qu'une fréquence de résonance $f_R$ prédéfinie apparaît lorsque le plateau de contact (7) est excité.

**3.** Dispositif selon la revendication 1 ou 2, **caractérisé en ce que** le plateau de contact (7) est en liaison active avec le dispositif d'entraînement (4) par l'intermédiaire du double balancier (9) et l'élément de masse (30) agit sur le plateau' de contact (7) par l'intermédiaire du balancier (9).

**4.** Dispositif selon au moins une des revendications 1 à 3, **caractérisé en ce que** la masse additionnelle (30) est fixée sur un bras supplémentaire (31) et agit sur le plateau de contact (7) par l'intermédiaire du bras supplémentaire (31). '

**5.** Dispositif selon au moins une des revendications 1 à 4, **caractérisé en ce que** la longueur du bras supplémentaire (31) peut être changée.

**6.** Dispositif selon au moins une des revendications 1 à 5, **caractérisé en ce que** la masse additionnelle (30) est déterminée en fonction de la longueur du bras supplémentaire (31), de la charge utile et de la constante de rappel d'au moins un élément élastique (3, 6).

**7.** Dispositif selon au moins une des revendications 1 à 6, **caractérisé en ce que** le double balancier (9) est constitué d'un premier bras oscillant (9a) et d'un second bras oscillant (9b), le premier bras oscillant (9a) est relié au dispositif d'entraînement (4) et la masse additionnelle (30) est reliée au second bras oscillant (9b) par l'intermédiaire du bras supplémentaire (31).

**8.** Dispositif selon au moins une des revendications 1 à 7, **caractérisé en ce que** le premier élément élastique (3) supporte sensiblement 10 % de la masse du plateau de contact (7) et le second élément élastique (6) supporte sensiblement 90 % de la masse du plateau de contact (7).

**9.** Dispositif selon au moins une des revendications 1 à 8, **caractérisé en ce que** la masse additionnelle (30) est fixée sur le plateau de contact (7).

**10.** Dispositif selon au moins une des revendications 3 à 9, **caractérisé en ce que** les bras oscillants (9a, 9b) du double balancier (9) ainsi que la ligne de jonction des points de rotation (33a, 33b) des bras oscillants (9a, 9b) avec la base (8) et la ligne de jonction des points de rotation (33a, 33b) des bras oscillants (9a, 9b) avec un élément (35) portant le plateau de contact forment un parallélogramme.

**11.** Procédé d'essai pour déterminer l'amortissement d'essieux de véhicules, comportant les étapes consistant à :

entraîner un plateau de contact (7) pour une roue de véhicule (2) par l'intermédiaire d'un premier élément élastique (3) et enregistrer un mouvement du plateau de contact (7) au moyen d'un dispositif de mesure (5), **caractérisé en ce qu'**un élément de masse (30) est prévu, lequel agit sur le plateau de contact (7) et influe sur une fréquence de résonance $f_R$ du plateau de contact oscillant (7).

**12.** Procédé selon la revendication 10, **caractérisé en que** l'élément de masse (30) est dimensionné de telle sorte qu'une fréquence de résonance $f_R$ prédéfinie apparaît lorsque le plateau de contact (7) est excité.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10143492 A1